# EUROPÄISCHE PATENTSCHRIFT

(11) **EP 2 362 094 B1**
(45) Veröffentlichungstag und Bekanntmachung des Hinweises auf die Patenterteilung: **11.06.2014**
(21) Anmeldenummer: 11152225.6
(22) Anmeldetag: 26.01.2011
(51) Int. Cl.: B29C 59/02, F03D 11/00, B23B 47/28, F03D 1/00, B29L 31/08

(54) **Verfahren und Vorrichtung zum Anbringen einer Referenzmarkierung an einem Rotorblatt einer Windenergieanlage**
Method and device for attaching a reference marking to a rotor blade of a wind turbine
Procédé et dispositif d'application d'un marquage de référence sur une pale de rotor d'une éolienne

(30) Priorität: 23.02.2010 DE 102010002230
(43) Veröffentlichungstag der Anmeldung: 31.08.2011
(73) Patentinhaber: Senvion SE, 22297 Hamburg (DE)
(72) Erfinder: Flach, Christian, 24790, Schacht Audorf (DE); Zeller, Lenz Simon, 24114, Kiel (DE)
(74) Vertreter: Volmer, Jochen

(56) Entgegenhaltungen:
- WO-A2-2008/092461
- DE-U1-202007 008 066
- JP-A- 2003 039 217
- US-A1- 2010 028 096

## Beschreibung

Die Erfindung betrifft ein Verfahren und eine Anordnung zum Anbringen einer Referenzmarkierung an einem Rotorblatt für eine Windenergieanlage sowie eine Verwendung.

Beim Betrieb von Windenergieanlagen führen Unwuchten, die durch verschiedene Einstellungen der Rotorblattwinkel der Rotorblätter eines Rotors entstehen, zu einer Verminderung des erreichbaren Energieertrages. Gleichzeitig gefährden sie die Integrität von Windenergieanlagen. Beim Errichten und beim Betrieb von Windenergieanlagen ist daher darauf zu achten, dass die Rotorblätter der Windenergieanlage mit identischen und vorbestimmten Einstellwinkeln betrieben werden. Hierzu verfügen die Rotorblätter üblicherweise über Referenzmarkierungen, auch 0°-Markierungen oder Nullmarkierungen genannt, die mit Markierungen auf der zentralen Rotornabe abgeglichen werden.

Es hat sich in der Praxis gezeigt, dass fehlerhafte Referenzmarkierungen zu Rotorunwuchten und reduziertem Energieeintrag führen. Wenn dies der Fall ist, müssen die Rotorblätter neu eingemessen werden. Hierbei ist eine Genauigkeit von wenigstens 0,3° erforderlich, wünschenswert ist eine Genauigkeit von weniger als 0,1 °.

In DE 196 28 073 C1 ist ein Verfahren zur Justierung der Blattwinkel einer Windenergieanlage offenbart, wonach die Leistungsabgabe der Windenergieanlage über einen längeren Zeitraum zeitaufgelöst gemessen wird. Die Leistungsabgabe wird den Leistungsbeiträgen der einzelnen Rotorblätter zugeordnet. Die Blattwinkel der Rotorblätter werden individuell angepasst und eingestellt, um aufgetretene Differenzen der einzelnen Leistungsbeiträge sowie aerodynamische Unwuchten zu minimieren. So werden Betriebsfestigkeitslasten reduziert und es wird verhindert, dass eine mit der Rotordrehzahl resonante Schwingung angeregt wird.

In DE 20 2007 008 066 U1 ist eine Vorrichtung zur Ausrichtung eines winkelverstellbaren Rotorblatts einer Windenergieanlage offenbart, die mindestens zwei Referenzpunkte aufweist, die im Innenraum des Rotorblatts in vorbestimmter Lage zum Rotorblatt anordbar sind. Die Vorrichtung umfasst eine Messeinrichtung, mit der die Lage der Referenzpunkte relativ zu einem Bezugssystem vermessbar ist. Durch die Anordnung der Referenzpunkte im Innenraum des Rotorblatts wird eine sichere, genaue und weitgehend wetterunabhängige und zeitsparende Möglichkeit zur Vermessung der Rotorblatteinstellwinkel geschaffen.

Aus US 2010/028096 A1 sind ein Verfahren und eine Vorrichtung zur Lokalisierung und zum Bohren eines Lochs in einem Kompositwerkstoff bekannt. Ein Bohrführungswerkzeug wird dabei auf den zu bearbeitenden Kompositwerkstoff gelegt und unter Hitzeeinwirkung und Vakuum mit dem Werkstoff verbunden. Anschließend wird mit einem Bohrer, der durch das Bohrführungswerkzeug geführt wird, ein Loch in den Kompositwerkstoff gebohrt.

JP 2003039217 A offenbart eine Führungsform für einen Handbohrer, mit dem ein Loch unter einem vorbestimmten Winkel an einer vorbestimmten Position an einem Werkstück mit einer Krümmung präzise angebracht werden kann. Dazu wird das Werkstück zunächst an einer Werkstückunterstützungshaltevorrichtung positioniert und zeitweise fixiert. Ein Führungsüberstand an der Haltevorrichtung wird in der Haltevorrichtung verschoben. Ein weiteres Führungsstück ist mit einem sphärischen Lager auf einen Hauptteil einer Haltevorrichtung angeordnet. Wenn dieser Führungskörper flach auf dem Werkstück anliegt, wird die Bohrung ausgeführt.

Das Dokument WO 2008/092461 offenbart ein Markierungsverfahren, das als nächstliegender Stand der Technik angesehen wird.

Ein übliches Verfahren zur Anbringung entsprechender Referenzmarkierungen sieht vor, dass an der fertig montierten Windenergieanlage eine Profilschablone von außen über ein Rotorblatt geschoben wird, welche dann mittels optischer Verfahren in Bezug zu einer Referenzebene, z.B. die Rotorebene oder die Rotorachsebene, eingemessen wird. Dies ist allerdings bei heutigen Größen von Windenergieanlagen mit Rotordurchmessern von weit über 100 m bei einer Anbringung derartiger Schablonen in über 50 m Höhe über dem Boden eine zeit- und kostenintensive Maßnahme.

Aus diesem Grund ist es inzwischen bevorzugt, Rotorblätter bereits nach deren Herstellung mit Referenzmarkierungen zu versehen, bevor sie an einer Windenergieanlage montiert werden. Hierfür ist bekannt, dass an der Außenseite am wurzelseitigen Ende eines Rotorblatts mittels eines Abwicklungsmaßes die Position für eine Nullmarkierung abgemessen wird, wobei von der Trennebene des Rotorblatts, d.h. der Ebene, die eine obere Halbschale von einer unteren Halbschale des Rotorblatts trennt, ausgegangen wird. Die Halbschalen bestehen üblicherweise aus einem mit einem Harzmaterial laminierten Verbund aus mehreren Lagen von Glas- und/oder Kohlefasermatten.

Schließlich sind auch Setzschablonen bekannt, die an den Innenflächen der Blattanschlusshülsen positioniert werden. Die erreichbare Genauigkeit bei diesem Verfahren hängt sowohl von der Positionierungsgenauigkeit der Hülse im Flansch als zuvor auch von der Genauigkeit der Positionierung des Flansches am Rotorblatt ab. Diese Toleranzen addieren sich auf.

Die zuvor beschriebenen Verfahren ermöglichen nicht die erforderliche Genauigkeit von 0,3°, vorzugsweise 0,1°, da für den an der Blattwurzel zu markierenden Nullwinkel die Neigung des Rotorblatts im Leistungsbereich maßgeblich ist, also dem äußeren, zur Spitze des Rotorblatts hin angeordneten Bereich, der den größten Leistungsbeitrag am Rotorblatt erbringt. Dementsprechend ist der 0°-Winkel bezüglich der Vorderkante des Rotorblattprofils im Leistungsbereich definiert, demgegenüber die Vorderkante des Rotorblattprofils an der Blattwurzel um einen gewissen Winkel verdreht ist. Die Nullmarkierung stimmt daher im Allgemeinen nicht mit der Position der Profilvorderkante an der Blattwurzel überein.

Das Rotorblatt ist sehr flexibel und verbiegt sich unter seinem Eigengewicht. Wenn das Profil bzw. die Profilvorderkante im Leistungsbereich senkrecht gestellt wird, ist nicht gewährleistet, dass der blattwurzelseitige Bereich in einer auf 0,1° bis 0,3° reproduzierbaren Position bzw. Winkelposition dazu steht. Aufgrund individueller Spannungen und Verzüge eines jeden Rotorblatts tritt eine Variation der Winkelverhältnisse und somit der Referenzmarkierungspunkte auf, die oberhalb des gewünschten Genauigkeitsbereiches liegt.

Gegenüber diesem Stand der Technik liegt der vorliegenden Erfindung die Aufgabe zugrunde, Referenzmarkierungen an einem Rotorblatt für eine Windenergieanlage reproduzierbar und mit hoher Genauigkeit anbringen zu können.

Diese Aufgabe wird durch ein Verfahren zum Anbringen einer Referenzmarkierung an einem Rotorblatt für eine Windenergieanlage gelöst, wobei nach dem Herstellen des Rotorblatts in einer Herstellungsform und vor dem Herauslösen des Rotorblatts aus der Herstellungsform mittels einer Markierungsvorrichtung, die mit einer an einer vorbestimmten oder vorbestimmbaren Position an der Herstellungsform angeordneten Haltevorrichtung verbindbar oder verbunden ist, eine Referenzmarkierung im Bereich einer Rotorblattwurzel des Rotorblatts angebracht wird.

Das erfindungsgemäße Verfahren hat den Vorteil, dass die Referenzmarkierung in einem Produktionsschritt eingefügt wird, in dem sich das Rotorblatt noch in seiner Herstellungsform befindet, so dass seine Position über die gesamte Länge des Rotorblatts sehr genau definiert ist. Die Markierung wird mittels eines Werkzeugs eingebracht, das fest mit der Form verbunden ist und somit ebenfalls eine genau definierte Position relativ zum Rotorblatt in seiner gesamten Länge einnimmt. Der Ungenauigkeiten verursachende Einfluss der Flexibilität des Rotorblattmaterials wird unterdrückt.

Hierzu ist es vorteilhaft, wenn die Markierungsvorrichtung nach der Herstellung des Rotorblatts in der Herstellungsform mit der Haltevorrichtung verbunden wird. Insbesondere für Harzinfusionsverfahren hat diese Vorgehensweise den Vorteil, dass die Markierungsvorrichtung nicht beim Injizieren von Harz in die Form stört oder im Wege steht. Dies fördert die vollständige Integrität des Materials des Rotorblatts an seinem blattwurzelseitigen Ende.

Vorteilhafterweise wird die Referenzmarkierung an einer Innenseite des Rotorblatts angebracht. Damit wird eine, insbesondere wetterunabhängige und zeitsparende, Möglichkeit zur Vermessung von Rotorblatteinstellwinkeln geschaffen, die insbesondere für Offshore-Windenergieanlagen, die rauen klimatischen Bedingungen ausgesetzt sind, besondere Vorteile bringt.

Eine bevorzugte Art und Weise der Anbringung einer Referenzmarkierung besteht darin, dass die Referenzmarkierung mittels einer Bohrung durch eine Bohrschablone der Markierungsvorrichtung erzeugt wird. Eine Bohrung, die insbesondere nicht mehr als 5 mm (Millimeter) tief in das Material des Rotorblatts eindringt, ist gut sichtbar und einfach zu vermessen, ohne das laminierte Material und damit die strukturelle Stärke des Rotorblatts zu beeinträchtigen.

Die der Erfindung zugrunde liegende Aufgabe wird auch durch eine Anordnung zum Anbringen einer Referenzmarkierung an einem Rotorblatt für eine Windenergieanlage, umfassend eine Herstellungsform für ein Rotorblatt und eine Vorrichtung zum Anbringen einer Referenzmarkierung an einem Rotorblatt für eine Windenergieanlage, umfassend eine Haltevorrichtung und eine Markierungsvorrichtung mit einem Markierungselement, gelöst, wobei die Haltevorrichtung ausgebildet ist, mit einer Herstellungsform für ein Rotorblatt in einer vorbestimmten oder vorbestimmbaren Position in einem Bereich eines blattwurzelseitigen Endes des Rotorblatts verbindbar oder verbunden zu sein, wobei die Markierungsvorrichtung ausgebildet ist, mit der Haltevorrichtung verbindbar oder verbunden zu sein, wobei die Haltevorrichtung in einer vorbestimmten oder vorbestimmbaren Position in einem Bereich eines blattwurzelseitigen Endes des Rotorblatts mit der Herstellungsform verbindbar oder verbunden ist.

Die erfindungsgemäße Anordnung weist den bereits zum erfindungsgemäßen Verfahren genannten Vorteil auf, dass eine Haltevorrichtung für die Markierungsvorrichtung an einer vorbestimmten oder vorbestimmbaren Position an der Herstellungsform angeordnet ist und eine Markierungsvorrichtung mit der Haltevorrichtung verbunden wird. Damit erhält das Markierungselement über die Markierungsvorrichtung und die Haltevorrichtung eine vorbestimmte und reproduzierbare Position in Bezug auf die Herstellungsform für das Rotorblatt sowie jedes in der Form hergestellte und angeordnete Rotorblatt, einschließlich in Bezug auf dessen Leistungsbereich, dessen Orientierung für die Nullmarkierung maßgeblich ist.

Das Markierungselement umfasst vorteilhafterweise einen Bohrer oder einen Farbapplikator, beispielsweise einen Druckkopf, einen Pinsel mit Farbe oder einen Stift. Vorzugsweise umfasst das Markierungselement eine Bohrschablone. Eine Bohrschablone wird im Rahmen der Erfindung als ein Führungskörper mit einer zentralen durchgehenden Öffnung für einen Bohrer verstanden, der mittels der Bohrschablone in einer festen und vorgegebenen Position angesetzt werden kann.

Vorteilhafterweise ist das Markierungselement in einer radialen Richtung eines rotorblattwurzelseitigen Bereichs der Herstellungsform, insbesondere lösbar fixierbar, bewegbar. Die radiale Richtung ist im Rahmen der Erfindung über die übliche Form des rotorblattwurzelseitigen Endes eines Rotorblatts definiert, weiche üblicherweise kreisförmig ist. Die radiale Richtung ist eine Richtung auf den Mittelpunkt dieses Kreises zu oder vom Mittelpunt des Kreises weg. Eine solche Bewegung verändert die Winkelposition des Markierungselements nicht. Die radiale Beweglichkeit bewirkt, dass das Markierungselement an verschiedene Dicken von Rotorblättern im blattwurzelseitigen Bereich des Rotorblatts angepasst werden kann, oder dass beispielsweise ein Bohrer oder ein Farbapplikator an die Oberfläche des Rotorblatts angenähert werden kann.

Vorzugsweise ist vorgesehen, dass das Markierungselement an einer Innenfläche eines Rotorblatts in der Herstellungsform angeordnet ist, wenn die Markierungsvorrichtung mit der Haltevorrichtung verbunden ist. Derart angeordnete Markierungen sind vor Witterungseinflüssen weitgehend geschützt und daher besonders langlebig.

In einer bevorzugten Weiterbildung ist die Haltevorrichtung in die Herstellungsform integriert. In diesem Fall ist ein Teil der Herstellungsform als Haltevorrichtung ausgebildet. Alternativ ist vorteilhafterweise die Haltevorrichtung lösbar mit der Herstellungsform verbunden.

Schließlich wird die der Erfindung zugrunde liegende Aufgabe auch durch eine Verwendung einer Vorrichtung mit einer Haltevorrichtung und einer Markierungsvorrichtung, insbesondere in einer zuvor beschriebenen erfindungsgemäßen Anordnung, zum Anbringen einer Referenzmarkierung an einem Rotorblatt für eine Windenergieanlage gelöst, die sich dadurch auszeichnet, dass die Haltevorrichtung und die Markierungsvorrichtung beim Anbringen der Referenzmarkierung am Rotorblatt an einer vorbestimmten oder vorbestimmbaren Position an einem blattwurzelseitigen Ende einer Herstellungsform für das Rotorblatt angeordnet ist. Die zuvor beschriebenen Vorteile sind auch bei der erfindungsgemäßen Verwendung vorhanden.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung zu einem bekannten Verfahren zum Anbringen einer Referenzmarkierung,
- Fig. 2 a), 2 b): schematische Darstellungen zu einem weiteren bekannten Verfahren zum Anbringen einer Referenzmarkierung,
- Fig. 3: eine perspektivische Ansicht einer erfindungsgemäßen Vorrichtung in schematischer Darstellung,
- Fig. 4: eine weitere perspektivische Ansicht der Vorrichtung gemäß Fig. 3 in schematischer Darstellung,
- Fig. 5: eine schematische Darstellung einer erfindungsgemäßen Anordnung in perspektivischer Ansicht und
- Fig. 6: eine schematische Schnittdarstellung durch eine erfindungsgemäße Markierungsvorrichtung in perspektivischer Ansicht.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

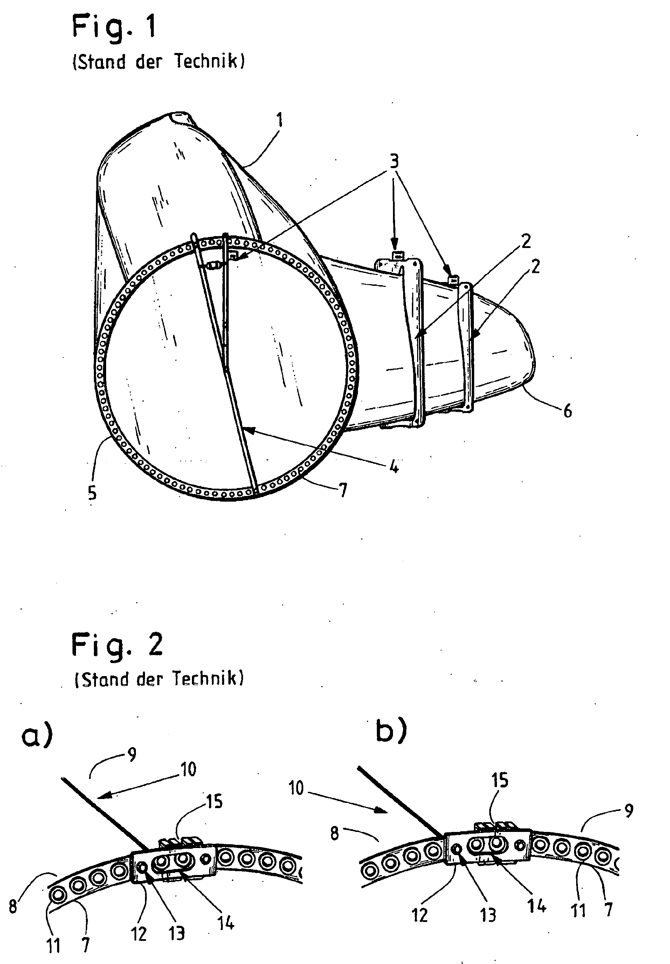

In Fig. 1 ist bezüglich eines bekannten Verfahrens zum Anbringen einer Referenzmarkierung bzw. Nullmarkierung schematisch ein perspektivischer Blick auf das blattwurzelseitige Ende eines Rotorblatts 1 gezeigt.

Die Rotorblattwurzel 5 trägt eine kreisförmige Blattanschlusshülse 7. Perspektivisch dahinter in das Bild hinein ist der Leistungsbereich des Rotorblatts 1 dargestellt, der in der Rotorblattspitze 6 endet.

Um eine Referenzmarkierung anzubringen, ist das Rotorblatt so gestellt, dass der Leistungsbereich senkrecht steht. Dafür sind zwei Profilschablonen 2 auf zwei verschiedene Positionen im Leistungsbereich des Rotorblatts 1 aufgeschoben, die jeweils mit einem Inklinometer 3 oder Neigungssensor 3 ausgerüstet sind. Anhand deren Anzeige wird bestimmt, wann der Leistungsbereich des Rotorblatts 1 senkrecht steht.

In der Blattanschlusshülse 7 ist eine 0°-Vorrichtung 4 zum Anbringen einer Nullmarkierung im Bereich der Blattwurzel angeordnet. Die 0°-Vorrichtung umfasst einen Arm, dessen Länge dem Durchmesser der Rotorblattwurzel 5 entspricht, sowie einen zweiten Arm, der halb so lang ist und im Mittelpunkt der Rotorblattwurzel 5 am ersten Arm angelenkt ist. Der erste Arm orientiert sich an der Ausrichtung des Rotorblatts 1 im Bereich der Blattwurzel 5 und steht unter einem Winkel zum Leistungsbereich. Der kürzere zweite Arm ist mit einem Inklinometer 3 ausgerüstet und wird zur Einmessung des Nullwinkels bzw. einer Nullmarkierung verwendet.

Das in Fig. 1 gezeigte Verfahren führt zu einer Referenzmarkierung oder Nullmarkierung, die nicht genau reproduzierbar ist, da der Leistungsbereich des Rotorblatts 1 und der wurzelseitige Bereich des Rotorblatts 1 nicht exakt und spannungsfrei reproduzierbar gegeneinander angeordnet werden können.

In Fig. 2 a) ist bezüglich eines weiteren Verfahrens des Standes der Technik das blattwurzelseitige Ende eines Rotorblatts schematisch dargestellt. Dieses umfasst zwei Halbschalen einer Hinterkante 8 und einer Vorderkante 9 des Rotorblatts, die an einer gemeinsamen Stoßkante 10 zusammenstoßen. Um eine 0°-Markierung zu erstellen, wird eine Setzschablone 12 auf die Blattanschlusshülse 7 aufgesetzt.

Die Setzschablone 12 umfasst einen Referenz-Pin 13 sowie ein Sichtfenster 14, durch das Bolzen 11 der Blattanschlusshülse 7 sichtbar sind. Unterhalb und oberhalb des Rotorblatts weist die Setzschablone Markierungsfähnchen 15 auf, zwischen denen eine Nullmarkierung gesetzt werden kann.

In Fig. 2 b) ist gezeigt, dass die Setzschablone 12 gegenüber der Position in Fig. 2 a) leicht verschoben ist. Damit wird verdeutlicht, dass die Genauigkeit dieses Verfahrens davon abhängt, dass die richtigen Bolzen 11 im Sichtfenster 14 erscheinen. Eine systematische Fehlerquelle entsteht in diesem Zusammenhang, wenn ein verkehrtes Paar von Bolzen 11 als Referenzpunkt oder Anhaltspunkt zur Positionierung der Setzschablone 12 verwendet wird.

Außerdem ist die Blattanschlusshülse 7 auf dem blattwurzelseitigen Ende der Schalen nicht ganz genau und reproduzierbar anbringbar, so dass auch nicht gewährleistet ist, dass die Bolzen 11 der Blattanschlusshülse 7 beispielsweise in Bezug auf die Stoßkante 10 immer die gleichen Relativpositionen einnehmen. Das führt zu einer weiteren Quelle von Ungenauigkeiten beim Anbringen von Markierungspositionen.

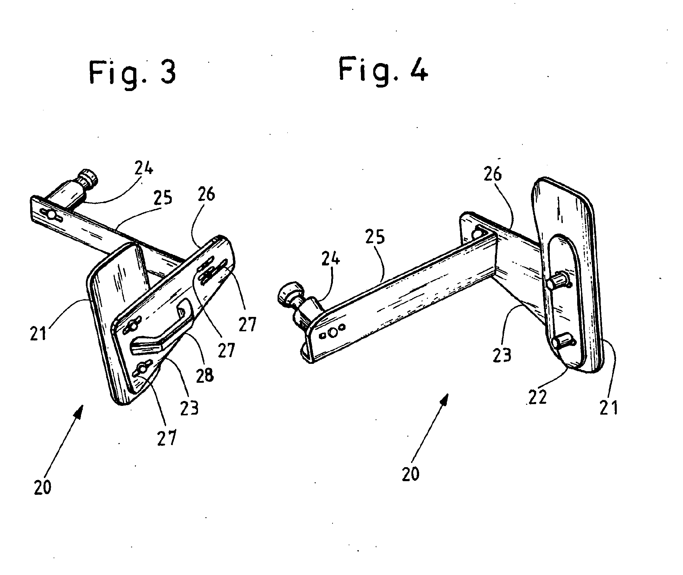

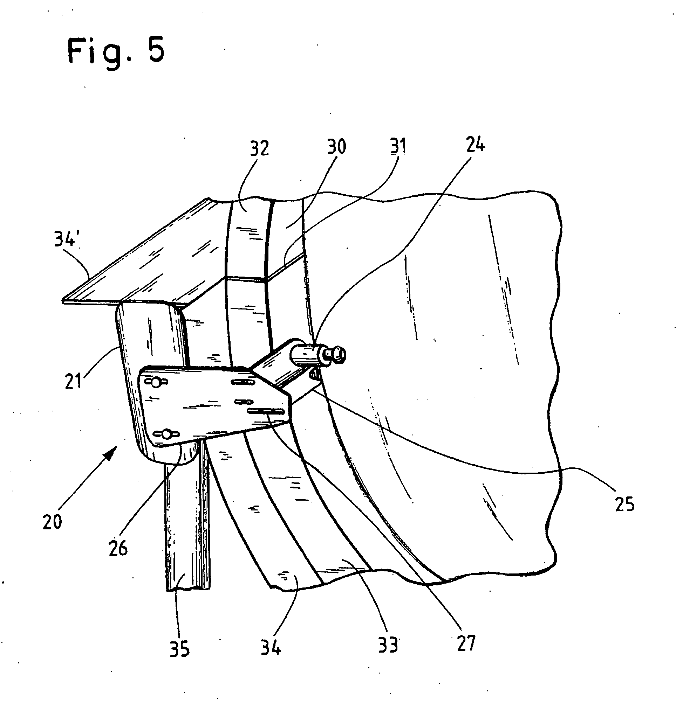

In Fig. 3 ist eine erfindungsgemäße Vorrichtung zum Anbringen von Referenzmarkierungen in Rotorblättern schematisch dargestellt. Die Vorrichtung 20 umfasst eine Haltevorrichtung 21 und eine Markierungsvorrichtung 23. Die Haltevorrichtung 21, die an einer in Fig. 5 dargestellten Herstellungsform für ein Rotorblatt fest anbringbar ist, ist in diesem Ausführungsbeispiel flächig ausgebildet.

Die Markierungsvorrichtung 23 umfasst in Fig. 3 eine Bohrschablone 24, die an einem Trägerarm 25 angeordnet ist, der seinerseits mit einem Abstandhalter 26 verbunden ist. Der Abstandhalter 26 ist mittels Schrauben durch Langlöcher 27 an der Haltevorrichtung 21 befestigbar bzw. in Fig. 3 befestigt. Der Trägerarm 25 ist ebenfalls über Langlöcher 27 an dem Abstandhalter 26 befestigt. Die Langlöcher 27 sind so orientiert, dass eine Variation der Position der Schrauben in den Langlöchern 27 zu einer radialen Verschiebung der Position der Bohrschablone 24 in Bezug auf eine kreisförmige Blattanschlusshülse 7 bzw. eine kreisförmige Rotorblattwurzel führt. Die Markierungsvorrichtung 23 verfügt außerdem über einen Handgriff 28, mit dem sie einfach handhabbar ist.

In Fig. 4 ist die erfindungsgemäße Vorrichtung 20 gemäß Fig. 3 aus einer anderen Perspektive schematisch dargestellt. In dieser rückwärtigen Perspektive ist erkennbar, dass der Trägerarm 25 als Winkelelement ausgebildet ist, und dass die Haltevorrichtung 21 eine rückwärtige Befestigungsplatte 22 aufweist. Diese weist Bohrungen für Schrauben auf, mittels der sowohl die Befestigungsplatte 22 als auch die Haltevorrichtung 21 mit einer Herstellungsform verbindbar sind.

In Fig. 5 ist eine erfindungsgemäße Anordnung schematisch dargestellt mit einer Ansicht in das blattwurzelseitige Ende einer Herstellungsform 34 mit einem darin bereits hergestellten Rotorblatt. Die dargestellte Innenseite 30 des Rotorblatts besteht aus einer oberen Halbschale 32 und einer unteren Halbschale 33, die an einer Stoßkante 31 zusammenstoßen. Die untere Halbschale 33 ist in der Herstellungsform 34 gelagert. Die Herstellungsform endet im Bereich der Stoßkante 31 in einer nach außen abzweigenden Abschlussfläche 34'. Die Herstellungsform 34 umfasst einen Stützpfeiler 35, der die Abschlussfläche 34' unterstützt.

Die Haltevorrichtung 21 ist an der Herstellungsform 34 angebracht, wobei diese an einer festen, vorbestimmten Position gegenüber der Herstellungsform 34 angeordnet ist. An der Haltevorrichtung 21 ist in Fig. 5 der Abstandhalter 26 aus Fig. 3 und Fig. 4 angebracht, an dessen gegenüberliegendem Ende in Langlöcher 27 der Trägerarm 25 angebracht ist. An dessen hinterem Ende ist die Bohrschablone 24 angeordnet. Diese weist eine trichterförmige Ansetzschablone auf, in die ein Bohrwerkzeug eingeführt werden kann, um durch die Bohrschablone 24 geführt an die Innenseite der unteren Halbschale 33 zu gelangen und dort eine Referenzmarkierung bzw. Nullmarkierung zu erzeugen. Die Länge der Bohrschablone 24 und eines Bohrwerkzeuges sind vorzugsweise so gewählt, dass das Bohrwerkzeug nur geringfügig, beispielsweise 5 mm, über die Bohrschablone 24 hinausragt, so dass nur eine flache Bohrung in dem Laminat der unteren Halbschale 33 angebracht wird.

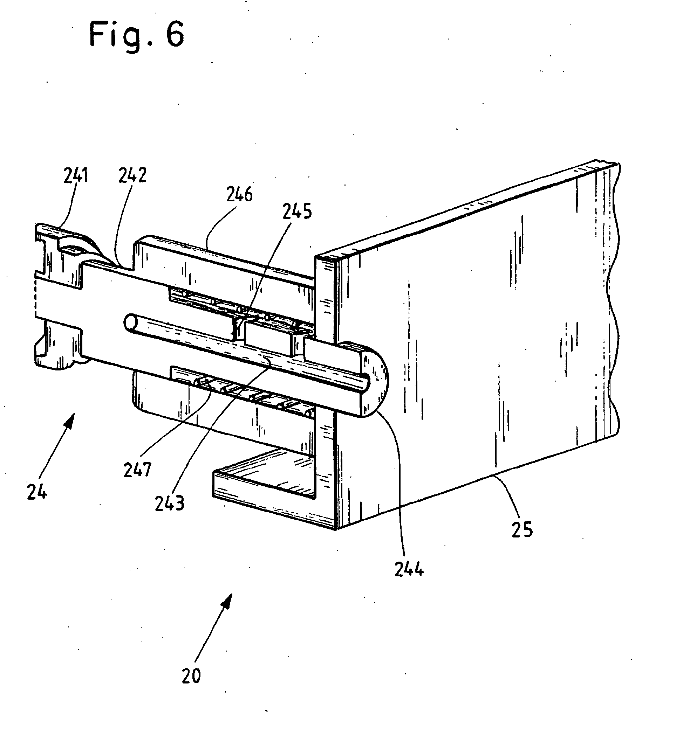

In Fig. 6 ist schematisch ein Querschnitt durch die Bohrschablone 24 und den winkelförmigen Trägerarm 25 gezeigt. Am eingangsseitigen Ende der Bohrschablone ist eine Ansetzschablone 241 vorgesehen, auf die beispielsweise ein Bohrfutter aufsetzbar ist. Dafür ist die Ansatzschablone 241 vorzugsweise rotierbar. An die Ansetzschablone 241 schließt sich ein Einsatzkörper 242 mit einer Führungsbohrung 243 für ein Bohrwerkzeug an, die in einer Endfläche 244 endet. Der Einsatzkörper 242 durchdringt dabei den Trägerarm 25. Im aktiven Zustand wird ein Bohrwerkzeug durch die Führungsbohrung 243 des Einsatzkörpers 242 hindurchgeführt und ragt ein wenig über die Endfläche 244 des Einsatzkörpers 242 hinaus.

Der Einsatzkörper 242 umfasst Schraubbohrungen 245 für bspw. Madenschrauben, um einen Bohrer in der Führungsbohrung 243 zu fixieren.

Der Einsatzkörper 242 ist in einem Führungskörper 246 gelagert, der mit dem Trägerarm 25 fest verbunden ist. Dieser weist in einem zylindrischen Innenraum eine Federschraube 247 auf, gegen den Widerstand der Einsatzkörper 242 in Richtung auf ein Rotorblatt gedrückt wird. Der Einsatzkörper 242 ist innerhalb des Führungskörpers 246 rotierbar gelagert.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 1: Rotorblatt
- 2: Profilschablone
- 3: Inklinometer
- 4: 0°-Vorrichtung für die Blattwurzel
- 5: Rotorblattwurzel
- 6: Rotorblattspitze
- 7: Blattanschlusshülse
- 8: Hinterkante
- 9: Vorderkante
- 10: Stoßkante
- 11: Bolzen
- 12: Setzschablone
- 13: Referenz-Pin
- 14: Sichtfenster
- 15: Markierungsfähnchen
- 20: Vorrichtung zum Anbringen einer Referenzmarkierung
- 21: Haltevorrichtung
- 22: Befestigungsplatte
- 23: Markierungsvorrichtung
- 24: Bohrschablone
- 241: Ansetzschablone
- 242: Einsatzkörper
- 243: Führungsbohrung
- 244: Endfläche
- 245: Schraubbohrung
- 246: Führungskörper
- 247: Federschraube
- 25: Trägerarm
- 26: Abstandhalter
- 27: Langloch

- 28: Handgriff
- 30: Innenseite eines Rotorblatts
- 31: Stoßkante
- 32: Obere Halbschale
- 33: Untere Halbschale
- 34: Herstellungsform für die untere Halbschale
- 34': oberer Abschluss der Herstellungsform
- 35: Stützpfeiler

## Patentansprüche

1. Verfahren zum Anbringen einer Referenzmarkierung an einem Rotorblatt (1) für eine Windenergieanlage, wobei nach dem Herstellen des Rotorblatts (1) in einer Herstellungsform (34, 34', 35) und vor dem Herauslösen des Rotorblatts (1) aus der Herstellungsform (34, 34', 35) mittels einer Markierungsvorrichtung (23), die mit einer an einer vorbestimmten oder vorbestimmbaren Position an der Herstellungsform (34, 34', 35) angeordneten Haltevorrichtung (21) verbindbar oder verbunden ist, eine Referenzmarkierung im Bereich einer Rotorblattwurzel (5) des Rotorblatts (1) angebracht wird.

2. Verfahren nach Anspruch 1, **dadurch gekennzeichnet, dass** die Markierungsvorrichtung (23) nach der Herstellung des Rotorblatts (1) in der Herstellungsform (34, 34', 35) mit der Haltevorrichtung (21) verbunden wird.

3. Verfahren nach Anspruch 1 oder 2, **dadurch gekennzeichnet, dass** die Referenzmarkierung an einer Innenseite (30) des Rotorblatts (1) angebracht wird.

4. Verfahren nach einem der Ansprüche 1 bis 3, **dadurch gekennzeichnet, dass** die Referenzmarkierung mittels einer Bohrung durch eine Borschablone (24) der Markierungsvorrichtung (23) erzeugt wird.

5. Anordnung zum Anbringen einer Referenzmarkierung an einem Rotorblatt (1) für eine Windenergieanlage, umfassend eine Herstellungsform (34, 34', 35) für ein Rotorblatt (1) und eine Vorrichtung (20) zum Anbringen einer Referenzmarkierung an einem Rotorblatt (1) für eine Windenergieanlage, umfassend eine Haltevorrichtung (21) und eine Markierungsvorrichtung (23) mit einem Markierungselement (24), wobei die Haltevorrichtung (21) ausgebildet ist, mit einer Herstellungsform (34, 34', 35) für ein Rotorblatt (1) in einer vorbestimmten oder vorbestimmbaren Position in einem Bereich eines blattwurzelseitigen Endes des Rotorblatts (1) verbindbar oder verbunden zu sein, wobei die Markierungsvorrichtung (23) ausgebildet ist, mit der Haltevorrichtung (21) verbindbar oder verbunden zu sein, wobei die Haltevorrichtung (21) in einer vorbestimmten oder vorbestimmbaren Position in einem Bereich eines blattwurzelseitigen Endes des Rotorblatts (1) mit der Herstellungsform (34, 34', 35) verbindbar oder verbunden ist.

6. Anordnung nach Anspruch 5, **dadurch gekennzeichnet, dass** das Markierungselement (24) eine Bohrschablone (24) umfasst.

7. Anordnung nach Anspruch 5 oder 6, **dadurch gekennzeichnet, dass** das Markierungselement (24) in einer radialen Richtung eines rotorblattwurzelseitigen Bereichs der Herstellungsform (34, 34`, 35), insbesondere lösbar fixierbar, bewegbar ist.

8. Anordnung nach einem der Ansprüche 5 bis 7, **dadurch gekennzeichnet, dass** das Markierungselement (24) an einer Innenfläche (30) eines Rotorblatts (1) in der Herstellungsform (34, 34', 35) angeordnet ist, wenn die Markierungsvorrichtung (23) mit der Haltevorrichtung (21) verbunden ist.

9. Anordnung nach einem der Ansprüche 5 bis 8, **dadurch gekennzeichnet, dass** die Haltevorrichtung (21) in die Herstellungsform (34, 34', 35) integriert ist.

10. Verwendung einer Vorrichtung (20) mit einer Haltevorrichtung (21) und einer Markierungsvorrichtung (23), insbesondere in einer Anordnung nach einem der Ansprüche 5 bis 9, zum Anbringen einer Referenzmarkierung an einem Rotorblatt (1) für eine Windenergieanlage, **dadurch gekennzeichnet, dass** die Haltevorrichtung (21) und die Markierungsvorrichtung (23) beim Anbringen der Referenzmarkierung am Rotorblatt (1) an einer vorbestimmten oder vorbestimmbaren Position an einem blattwurzelseitigen Ende einer Herstellungsform (34, 34', 35) für das Rotorblatt (1) angeordnet ist.

## Claims

1. A method of attaching a reference marking to a rotor blade (1) of a wind turbine, wherein, after the manufacture of the rotor blade (1) in a manufacturing mould (34, 34, 35) and before the removal of the rotor blade (1) from the manufacturing mould (34, 34', 35), a reference marking is attached in the region of a rotor blade root (5) of the rotor blade (1) by means of a marking device (23), which is connectable or connected to a mounting device (21) arranged at a predetermined or predeterminable position on the manufacturing mould 34, 34, 35).

2. A method as claimed in claim 1, **characterised in that** the marking device (23) is connected to the mounting device (21) after the manufacture of the rotor blade (1) in the manufacturing mould (34, 34, 35).

3. A method as claimed in claim 1 or 2, **characterised in that** the reference marking is attached to the inner side (30) of the rotor blade (1).

4. A method as claimed in one of claims 1 to 3, **characterised in that** the reference marking is produced by means of a bore through a boring jig (24) of the marking device (23)

5. Apparatus for attaching a reference marking to a rotor blade (1) for a wind turbine including a manufacturing mould (34, 34, 35) for the rotor blade (1) and a device (20) for attaching a reference marking to a rotor blade (1) for a wind turbine including a mounting device (21) and a marking device (23) with a marking element (24), wherein the mounting device (21) is constructed to be connectable or connected to a manufacturing mould (34, 34, 35) for a rotor blade (1) in a predetermined or predeterminable position in a region of a blade root end of the rotor blade (1), wherein the marking device (23) is constructed to be connectable or connected to the mounting device (21), wherein the mounting device (21) is connectable or connected to the manufacturing mould (34, 34, 35) in a predetermined or predeterminable position in a region of a blade root end of the rotor blade (1).

6. Apparatus as claimed in claim 5, **characterised in that** the marking element (24) includes a boring jig (24).

7. Apparatus as claimed in claim 5 or 6, **characterised in that** the marking element (24) is movable, particularly releasably fixable, in a radial direction of a rotor blade root region of the manufacturing mould (34, 34', 35).

8. Apparatus as claimed in one of claims 5 to 7, **characterised in that** the marking element (24) is arranged on an inner surface (30) of a rotor blade (1) in the manufacturing mould (34, 34', 35), when the marking device (23) is connected to the mounting device (21).

9. Apparatus as claimed in one of claims 5 to 8, **characterised in that** the mounting device (21) is integrated into the manufacturing mould (34, 34', 35).

10. Use of a device (20) with a mounting device (21) and a marking device (23), particularly in an apparatus as claimed in one of claims 5 to 9, for attaching a reference marking to a rotor blade (1) for a wind turbine, **characterised in that** the mounting device (21) and the marking device (23) are arranged, during the attachment of the reference marking to the rotor blade (1) at a predetermined or predeterminable position on a blade root end of a manufacturing mould (34, 34', 35) for the rotor blade (1).

## Revendications

1. Procédé permettant l'application d'une marque servant de repère sur la pale d'un rotor (1) pour une éolienne, dans lequel, après la production de la pale d'un rotor (1) dans un moule de fabrication (34, 34 ', 35) et avant l'extraction de la pale d'un rotor (1) du moule de fabrication (34, 34 ', 35), une marque servant de repère est appliquée au moyen d'un dispositif de marquage (23), dispositif disposé à une position prédéterminée ou pouvant être prédéterminée sur le moule de fabrication (34, 34', 35) et sur lequel est agencé un dispositif de maintien (21) qui est relié ou qui peut être relié de sorte à ce qu'une marque servant de repère puisse être appliquée au niveau de la racine (5) de la pale d'un rotor (1)

2. Procédé selon la revendication 1, **caractérisé en ce que** le dispositif de marquage (23), après la fabrication de la pale d'un rotor (1) dans le moule de fabrication (34, 34', 35), est relié au dispositif de maintien (21).

3. Procédé selon la revendication 1 ou la revendication 2, **caractérisé en ce que** la marque servant de repère est appliquée sur la surface intérieure (30) de la pale d'un rotor (1).

4. Procédé selon l'une quelconque des revendications 1 à 3, **caractérisé en ce que** la marque servant de repère est appliquée au moyen d'un perçage au travers d'un gabarit (24) du dispositif de marquage (23).

5. Agencement pour appliquer une marque servant de repère sur la pale d'un rotor (1) pour une éolienne, **caractérisé en ce qu'**il comprend un moule de fabrication (34, 34 ', 35) pour la pale d'un rotor (1) et un dispositif (20) pour appliquer une marque servant de repère sur la pale d'un rotor (1) pour une éolienne, comprenant un dispositif de maintien (21) et un dispositif de marquage (23) avec un élément de marquage (24), dans lequel le dispositif de maintien (21) est fixé sur un moule de fabrication (34, 34 ', 35) pour la pale d'un rotor (1) dans une position prédéterminée ou pouvant être prédéterminée et qui est relié ou qui peut être relié à la racine de la pale d'un rotor (1), dans lequel le dispositif de marquage (23) est construit de manière à pouvoir être connecté ou relié au dispositif de maintien (21), dans lequel le dispositif de maintien (21) est relié ou peut être relié avec le moule de fabrication (34, 34 ', 35) dans une position prédéterminée ou pouvant être prédéterminée au niveau de la racine de la pale d'un rotor (1).

6. Agencement selon la revendication 5, **caractérisé en ce que** l'élément de marquage (24) comprend un gabarit (24).

7. Agencement selon la revendication 5 ou la revendication 6, **caractérisé en ce que** l'élément de marquage (24) est mobile de manière radiale vis à vis de la racine de la pale d'un rotor, et en particulier, est fixé de manière amovible au moule de fabrication (34, 34 ', 35).

8. Dispositif selon l'une des revendications 5 à 7, **caractérisé en ce que** l'élément de marquage (24) est agencé sur la surface intérieure (30) de la pale d'un rotor (1) dans le moule de fabrication (34, 34 ', 35) lorsque le dispositif de marquage (23) est connecté avec le dispositif de maintien (21).

9. Dispositif selon l'une des revendications 5 à 8, **caractérisé en ce que** le dispositif de maintien (21) est intégré dans le moule de fabrication (34', 34, 35).

10. Utilisation d'un dispositif (20) avec un dispositif de maintien (21) et un dispositif de marquage (23), en particulier dans un dispositif selon l'une des revendications 5 à 9, pour l'application d'une marque servant de repère sur une pale d'un rotor (1) pour une éolienne, **caractérisé en ce que** le dispositif (21) et le dispositif de marquage (23), lors de l'application de la marque servant de repère sur la pale d'un rotor (1), ont une position prédéterminée ou pouvant être prédéterminée au niveau de la racine de la pale d'un rotor (1) dans un moule de fabrication (34, 34 ', 35)
